# EUROPEAN PATENT APPLICATION

(11) **EP 3 179 734 A1**
(43) Date of publication of application: **14.06.2017**
(21) Application number: 16199521.2
(22) Date of filing: 18.11.2016
(51) Int. Cl.: H04N 21/422, H04L 12/28, H04N 21/436

(54) **AUDIO/VIDEO PLAYING METHOD AND APPARATUS**

(30) Priority: 11.12.2015 CN 201510921147
(71) Applicant: Xiaomi Inc., Beijing 100085 (CN)
(72) Inventor: WEN, Zhenwei, Beijing, Beijing 100085 (CN); CHEN, Hong, Beijing, Beijing 100085 (CN); HOU, Enxing, Beijing, Beijing 100085 (CN)
(74) Representative: Jeffrey, Philip Michael

(57) **Abstract**

The embodiments of the present disclosure disclose an audio/video playing method and apparatus, and belong to the technical field of multimedia. The method includes that: when a first playing device of at least two playing devices plays an audio/video, a position characteristic of a wearable device is acquired (201); a second playing device of the at least two playing devices is determined according to the position characteristic (202); and the second playing device is controlled to play the audio/video (203).

## Description

### TECHNICAL FIELD

The present disclosure generally relates to the technical field of multimedia, and more particularly, to an audio/video playing method and apparatus.

### BACKGROUND

A playing device with capability of playing an audio/video, such as a television, a speaker and a projector, has been widely used by users. A single user may own two or more pieces of playing device.

For example, if the playing device is a television, a user usually turns on the television in a living room and then watches a television program on a sofa opposite to the television. However, if the user temporally moves from the living room to another room, the user cannot normally watch and listen to the television program.

### SUMMARY

The present invention provides an audio/video playing method and apparatus, in accordance with claims which follow.

According to a first aspect, the invention relates to an audio/video playing method applied to a control device connected with at least two playing devices, comprising: when a first playing device of the at least two playing devices plays an audio/video, acquiring a position characteristic of a wearable device; determining a second playing device of the at least two playing devices according to the position characteristic; and controlling the second playing device to play the audio/video.

In the first aspect, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

According to a particular embodiment, the position characteristic of the wearable device is a geographical position of the wearable device; and determining the second playing device of the at least two playing devices according to the position characteristic comprises: determining a playing device, which is closest to the wearable device, as the second playing device according to the geographical position of the wearable device and a pre-stored geographical position of each of the playing devices.

According to a particular embodiment, the position characteristic of the wearable device is received signal strength, on the playing device side, of a radio broadcast message sent by the wearable device; and determining the second playing device of the at least two playing devices according to the position characteristic comprises: determining a playing device corresponding to the strongest received signal strength as the second playing device.

According to a particular embodiment, determining the playing device corresponding to the strongest received signal strength as the second playing device comprises: determining the strongest received signal strength of at least two received signal strengths; detecting whether a duration, for which the strongest received signal strength is kept stronger than predefined signal strength, reaches a predefined period of time or not; and if the duration, for which the strongest received signal strength is kept stronger than the predefined signal strength, reaches the predefined period of time, determining the playing device corresponding to the strongest received signal strength as the second playing device.

According to a particular embodiment, controlling the second playing device to play the audio/video comprises: acquiring from the first playing device the audio/video comprising any one of an audio, a video, a video part of the video and an audio part of the video; and forwarding the audio/video to the second playing device which is configured to play the audio/video.

According to a second aspect, the invention relates to an audio/video playing method applied to a second playing device, comprising: determining received signal strength of a radio broadcast message sent by a wearable device; sending the received signal strength to a control device; receiving an audio/video sent by the control device when the strongest received signal strength is the received signal strength sent by the second playing device after the control device receives the received signal strengths sent by at least two playing devices comprising a first playing device and the second playing device, the audio/video being an audio/video played by the first playing device; and playing the audio/video.

In the second aspect, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

According to a third aspect, the invention relates to an audio/video playing apparatus applied to a control device which is connected with at least two playing devices, comprising: an acquisition module configured to, when a first playing device of the at least two playing devices plays an audio/video, acquire a position characteristic of a wearable device; a determination module configured to determine a second playing device of the at least two playing devices according to the position characteristic acquired by the acquisition module; and a control module configured to control the second playing device determined by the determination module to play the audio/video.

In the third aspect, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

According to a particular embodiment, the position characteristic, acquired by the acquisition module, of the wearable device is a geographical position of the wearable device; and the determination module comprises: a first determination sub-module configured to determine a playing device, which is closest to the wearable device, as the second playing device according to the geographical position of the wearable device and a pre-stored geographical position of each of the playing devices.

According to a particular embodiment, the position characteristic, acquired by the acquisition module, of the wearable device is received signal strength, on the playing device side, of a radio broadcast message sent by the wearable device; and the determination module further comprises: a second determination sub-module configured to determine a playing device corresponding to the strongest received signal strength as the second playing device.

According to a particular embodiment, the second determination sub-module comprises: a third determination sub-module configured to determine the strongest received signal strength of at least two received signal strengths; a detection sub-module configured to detect whether a duration, for which the strongest received signal strength determined by the third determination sub-module is kept stronger than predefined signal strength, reaches a predefined period of time or not; and a fourth determination sub-module configured to, if the duration, for which the strongest received signal strength is kept stronger than the predefined signal strength, reaches the predefined period of time, determine the playing device corresponding to the strongest received signal strength as the second playing device.

According to a particular embodiment, the control module comprises: an acquisition sub-module configured to acquire from the first playing device the audio/video comprising any one of an audio, a video, a video part of the video and an audio part of the video; and a forwarding sub-module configured to forward the audio/video to the second playing device which is configured to play the audio/video.

According to a fourth aspect, the invention relates to an audio/video playing apparatus applied to a second playing device, comprising: a signal strength determination module configured to determine received signal strength of a radio broadcast message sent by a wearable device; a sending module configured to send the received signal strength to a control device; a receiving module configured to receive an audio/video sent by the control device when the strongest received signal strength is the received signal strength sent by the second playing device after the control device receives the received signal strengths sent by at least two playing devices comprising a first playing device and the second playing device, the audio/video being an audio/video played by the first playing device; and a playing module configured to play the audio/video.

In the fourth aspect, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

According to a fifth aspect, the invention relates to an audio/video playing apparatus applied to a control device which is connected with at least two playing devices, comprising: a processor; and a memory configured to store instructions executable by the processor, wherein the processor is configured to: when a first playing device of the at least two playing devices plays an audio/video, acquire a position characteristic of a wearable device; determine a second playing device of the at least two playing devices according to the position characteristic; and control the second playing device to play the audio/video.

In the fifth aspect, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

According to a sixth aspect, the invention relates to an audio/video playing apparatus applied to a second playing device, comprising: a processor; and a memory configured to store instructions executable by the processor, wherein the processor is configured to: determine received signal strength of a radio broadcast message sent by a wearable device; send the received signal strength to a control device; receive an audio/video sent by the control device when the strongest received signal strength is the received signal strength sent by the second playing device after the control device receives the received signal strengths sent by at least two playing devices comprising first playing device and the second playing device, the audio/video being an audio/video played by the first playing device; and play the audio/video.

In the sixth aspect, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

In one particular embodiment, the steps of any one of the audio/video playing methods are determined by computer program instructions.

Consequently, according to a seventh aspect, the invention is also directed to a computer program for executing the steps of any one of the audio/video playing methods as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and following detailed descriptions are only exemplary and explanatory and not intended to limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the embodiments of the present disclosure.
Fig. 1 is a schematic diagram showing an implementation environment according to an exemplary embodiment.
Fig. 2 is a flow chart showing an audio/video playing method according to an exemplary embodiment.
Fig. 3 is a flow chart showing an audio/video playing method according to another exemplary embodiment.
Fig. 4A is a flow chart showing an audio/video playing method according to another exemplary embodiment.
Fig. 4B is a flow chart showing a method for determining a second playing device according to an embodiment shown in Fig. 4A.
Fig. 5 is a block diagram showing an audio/video playing apparatus according to an exemplary embodiment.
Fig. 6 is a block diagram showing an audio/video playing apparatus according to another exemplary embodiment.
Fig. 7 is a block diagram showing an audio/video playing apparatus according to another exemplary embodiment.
Fig. 8 is a block diagram showing an audio/video playing apparatus according to another exemplary embodiment.
Fig. 9 is a block diagram showing a device according to an exemplary embodiment.
Fig. 10 is a block diagram showing another device according to an exemplary embodiment.

### DETAILED DESCRIPTION

Description will now be made in detail on exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the embodiments of the present disclosure. Instead, they are merely examples of apparatuses and methods consistent with some aspects related to the embodiments of the present disclosure as recited in the appended claims.

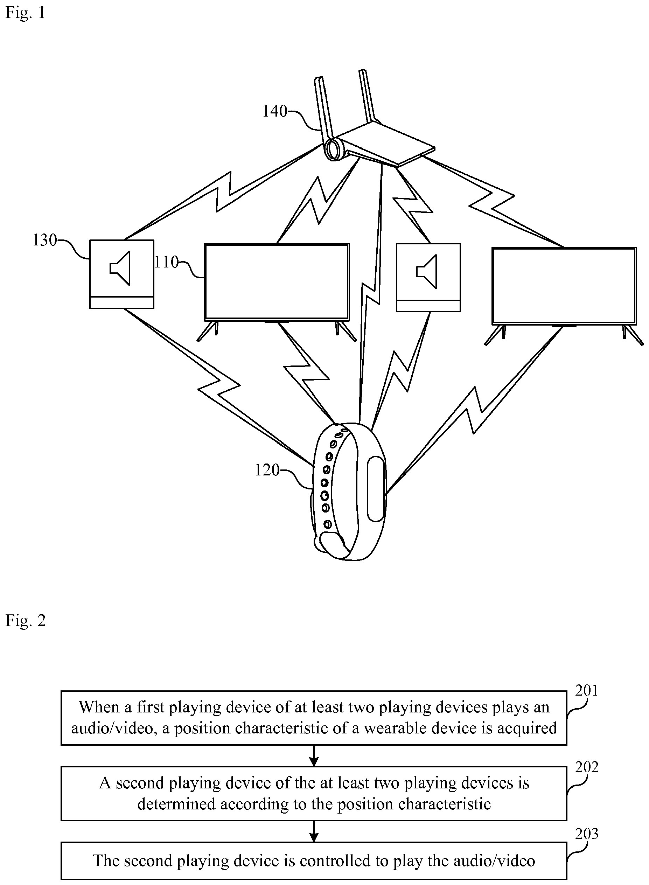

Fig. 1 is a schematic diagram of an implementation environment according to an exemplary embodiment. The implementation environment may include a first playing device 110, a wearable device 120, a second playing device 130 and a control device 140.

The first playing device 110 is connected with the wearable device 120 through a wireless network, and is also connected with the control device 140 through a wired network or the wireless network. The wireless network includes, but not limited to, BlueTooth (BT), Wireless Fidelity (Wi-Fi), ZigBee, Infrared Data Association (IrDA) technology, or the like.

The wearable device 120 is connected with each of the first playing device 110, the second playing device 130 and the control device 140 in a wireless manner.

Like the first playing device 110, the second playing device 130 is connected with the wearable device 120 in the wireless manner, and is also connected with the control device 140 through the wired or wireless network.

The control device 140 is connected with the first playing device 110 and the second playing device 130 through the wired or wireless network, and is connected with the wearable device 120 through the wireless network. The control device may be a device such as a gateway, a router or a computer.

In such case, each of the first playing device 110 and the second playing device 130 may be a device, such as a speaker device or a television, which is capable of playing an audio/video. The speaker device may be a BlueTooth speaker.

Optionally, in another possible implementation, instead of the control device 140, a server may perform a method which is performed by the control device 140 to implement the solutions disclosed by the embodiments of the present disclosure.

The technical solutions provided by the various embodiments of the present disclosure will be introduced and described below with reference to the implementation environment shown in Fig. 1 as an example.

Fig. 2 is a flow chart showing an audio/video playing method according to an exemplary embodiment. In the embodiment is described with reference to an example in which the audio/video playing method is applied to the control device 140 shown in Fig. 1. The audio/video playing method may include the following steps.

In Step 201, when a first playing device of at least two playing devices plays an audio/video, a position characteristic of a wearable device is acquired.

In Step 202, a second playing device of the at least two playing devices is determined according to the position characteristic.

In Step 203, the second playing device is controlled to play the audio/video.

As described above, according to the audio/video playing method provided by the embodiments of the present disclosure, when the first playing device of the at least two playing devices plays the audio/video, the position characteristic of the wearable device is acquired; the second playing device of the at least two playing devices is determined according to the position characteristic; and the second playing device is controlled to play the audio/video. In such way, the problem that a user cannot continue watching the audio/video played by the first playing device after the user moves from a room where the first playing device is located to a new room in a related technology is solved. In addition, the effects that the user wearing the wearable device may continue watching the audio/video through the second playing device in the new room and the user may continue watching the audio/video at different indoor positions are achieved.

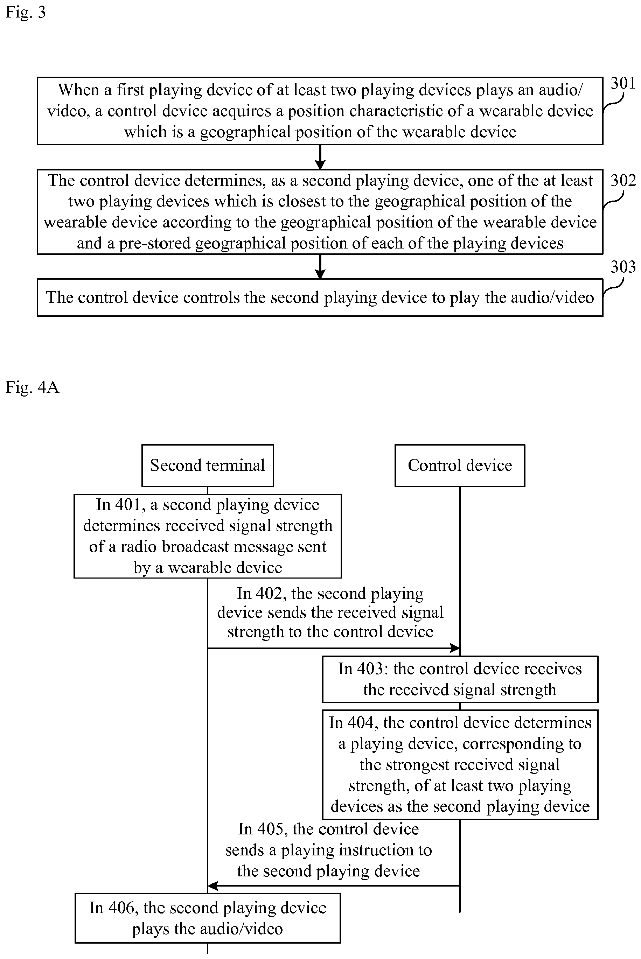

Fig. 3 is a flow chart showing an audio/video playing method according to another exemplary embodiment. The embodiment is described with reference to an example in which the audio/video playing method is applied to an implementation environment shown in Fig. 1. The audio/video playing method may include the following steps.

In Step 301, when a first playing device of at least two playing devices plays an audio/video, a control device acquires a position characteristic of a wearable device, which is a geographical position of the wearable device.

When the first playing device plays the audio/video, the control device acquires the position characteristic of the wearable device.

The control device may acquire the position characteristic of the wearable device by using a series of positioning technologies such as a Global Positioning System (GPS) positioning technology, a Wi-Fi positioning technology, a BT positioning technology, a ZigBee positioning technology or the like. For example, when the control device adopts the GPS positioning technology, the wearable device sends information of a request for positioning to a GPS satellite, the GPS satellite sends a position of the wearable device to the wearable device by positioning calculation, and then the wearable device sends its position information to the control device. In such way, the control device can acquire the position characteristic of the wearable device.

In Step 302, the control device determines a playing device, which is closest to the wearable device, of the at least two playing devices as a second playing device according to the geographical position of the wearable device and a pre-stored geographical position of each of the playing devices.

The geographical position may be represented by latitude and longitude coordinates, or coordinates of a polar coordinate system which is constructed by taking the control device as a reference point.

In a possible implementation, the geographical position of the wearable device and the pre-stored geographical position of each of the playing devices may all be represented in form of latitude and longitude coordinates. The control device calculates distances between the geographical position of the wearable device and the pre-stored geographical position of each of the playing devices to obtain the playing device which is closest to the wearable device, and then determines the playing device as the second playing device. For example, distances between the wearable device and pre-stored four playing devices are 3 meters, 5 meters, 8 meters and 12 meters respectively, and then the playing device at the distance of 3 meters away from the wearable device is selected as the second playing device.

In another possible implementation, the pre-stored geographical position of each of the playing devices corresponds to a predefined area. The control device finds a preset area corresponding to the geographical position of the wearable device at first, and then the control device finds a playing device in the preset area, and determines the playing device in the predefined area as the second playing device. For example, in a house, the control device receives the geographical position of the wearable device, 15 degrees east by south and 7.8 meters, which is sent from the wearable device. Then the control device may learn about that the geographical position is in a master bedroom, that is, the wearable device is in the master bedroom, according to a pre-stored preset area. Then the control device finds a playing device in the master bedroom according to the pre-stored geographical position of the playing device, and selects the playing device in the master bedroom as the second playing device. In such case, if there are a plurality of playing devices in the master bedroom, and the control device may select one or more of the playing devices as the second playing device according to a predefined selection rule.

In Step 303, the control device controls the second playing device to play the audio/video.

After the control device determines the second playing device, the first playing device continues playing the audio/video, and the control device sends an audio/video file or audio/video stream to be played to the second playing device which, as a playing carrier of the audio/video, will play the audio/video. If the second playing device is in an off state, the control device sends a turning-on instruction to the second playing device to turn on the second device, and then sends a playing instruction to indicate the second playing device to play the audio/video. If the second playing device is in a standby state, the control device sends the playing instruction to the second playing device to indicate the second playing device to play the audio/video.

Optionally, the control device acquires from the first playing device the audio/video which includes any one of an audio, a video, a video part of the video and an audio part of the video. The control device forwards the audio/video to the second playing device which is configured to play the audio/video.

For example, the first playing device is a television in a living room, the wearable device is a smart band, the control device is a router, the second playing device is a BT speaker in the master bedroom, a user watches a certain television program through the television in the living room at first, and then moves from the living room to the master bedroom, and in the meantime, the user sends a geographical position of the worn smart band to the router through the smart band. At this moment, the router determines that playing device of which a geographical position is in the master bedroom is the BT speaker, and switches an audio part of an audio/video played in the television to the BT speaker for playing.

As described above, according to the audio/video playing method provided by the embodiments of the present disclosure, when the first playing device of the at least two playing devices plays the audio/video, the position characteristic of the wearable device is acquired, the position characteristic of the wearable device being the geographical position of the wearable device; the playing device which is closest to the wearable device is determined as the second playing device according to the geographical position of the wearable device and the pre-stored geographical position of each of the playing devices; and the second playing device is controlled to play the audio/video. In such way, the problem that the user cannot continue watching the audio/video played by the first playing device after the user moves from a room where the first playing device is located to a new room in the related technology is solved. In addition, the effects that the user wearing the wearable device may continue watching the audio/video through the second playing device in the new room and the user may continue watching the audio/video at different indoor positions are achieved.

Fig. 4A is a flow chart showing an audio/video playing method according to another exemplary embodiment, and the embodiment is described with reference to an example in which the audio/video playing method is applied to an implementation environment shown in Fig. 1. The audio/video playing method may include the following steps.

In Step 401, a second playing device determines received signal strength of a radio broadcast message sent by a wearable device.

In Step 402: the second playing device sends the received signal strength to a control device.

In Step 403: the control device receives the received signal strength.

When a first playing device plays an audio/video, the control device acquires a position characteristic of the wearable device, which is the received signal strength, on the playing device side, of the radio broadcast message sent by the wearable device.

The method for representing the received signal strength includes, but not limited to a Received Signal Strength Indication (RSSI), received power or the like.

For example, a user wearing the wearable device moves in own house, the wearable device that the user wears sends the radio broadcast message to each of the playing devices in the house in real time, each of the playing devices in the house sends received signal strength on its own side to the control device. There are at least two playing devices in the house.

In Step 404, the control device determines a playing device, corresponding to the strongest received signal strength, of the at least two playing devices as the second playing device.

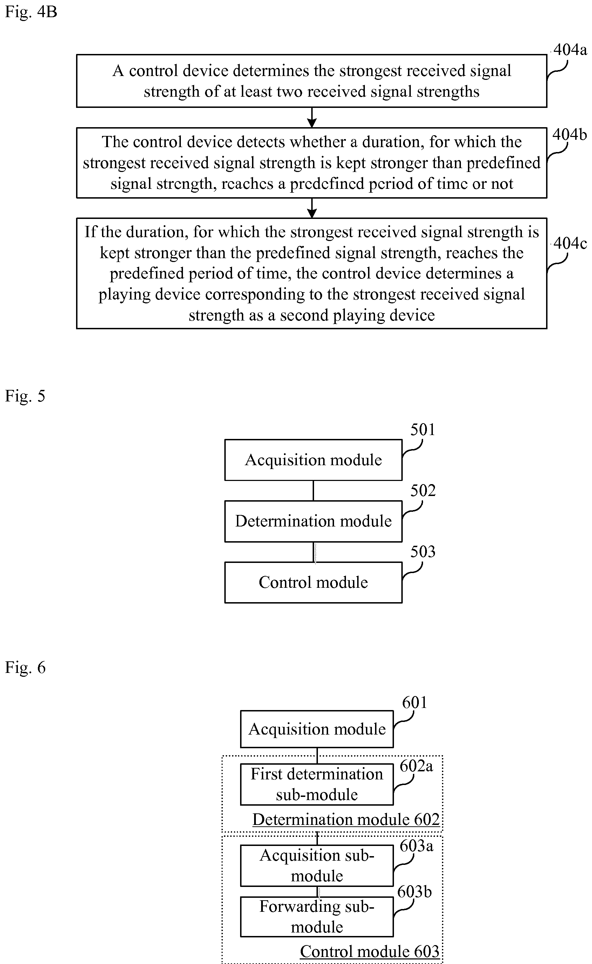

Fig. 4B is a flow chart showing a method for determining a second playing device, and referring to Fig. 4B, Step 404 may include three sub-steps, i.e. Step 404a, Step 404b and Step 404c.

In Step 404a, the control device determines the strongest received signal strength of at least two received signal strengths.

The control device compares all the received signal strengths, and determines the strongest received signal strength.

In Step 404b, the control device detects whether a duration, for which the strongest received signal strength is kept stronger than predefined signal strength, reaches a predefined period of time or not.

Another possible manner, in which the detection in Step 404b is implemented, is that after determining the strongest received signal strength, the control device continuously detects received signal strengths, which are sent following the strongest received signal strength, and judges whether all the signal strengths, which are sent following the strongest received signal strength for a predefined period of time, are stronger than the predefined signal strength or not.

In Step 404c, if the duration, for which the strongest received signal strength is kept stronger than the predefined signal strength, reaches the predefined period of time, the control device determines the playing device corresponding to the strongest received signal strength as the second playing device.

Correspondingly, the second playing device receives an audio/video sent by the control device when the strongest received signal strength is the received signal strength sent by the second playing device after the control device receives the received signal strengths sent by the at least two playing devices including the first playing device and the second playing device, wherein the audio/video is an audio/video played by the first playing device.

In Step 405, the control device sends a playing instruction to the second playing device.

In Step 406, the second playing device plays the audio/video.

Correspondingly, the control device sends an instruction to the second playing device for indicating the second playing device to play the audio/video.

After the control device determines the second playing device, the first playing device continues playing the audio/video, and an audio/video file or audio/video stream to be played is sent to the second playing device which, as a playing carrier of the audio/video, will play the audio/video. If the second playing device is in an off state, the control device sends a turning-on instruction to the second playing device to turn on the second playing device, and then sends the playing instruction to indicate the second playing device to play the audio/video. If the second playing device is in a standby state, the control device sends the playing instruction to the second playing device to indicate the second playing device to play the audio/video.

Optionally, the control device acquires from the first playing device the audio/video which includes any one of an audio, a video, a video part of the video and an audio part of the video. The control device forwards the audio/video to the second playing device which is configured to play the audio/video.

For example, the first playing device is a television in a living room, the wearable device is a smart band, the control device is a router, the second playing device is a BT speaker in a master bedroom, a user watches a certain television program through the television in the living room at first, and then moves from the living room to the master bedroom, and in the meantime, the user sends a geographical position of the worn smart band to the router through the smart band. At this moment, the router determines that the playing device of which a geographical position is in the master bedroom is the BT speaker, and switches an audio part of an audio/video played in the television to the BT speaker for playing.

For example, the first playing device is the television in the living room, the wearable device is the smart band, the control device is the router, the second playing device is the BT speaker in the master bedroom, the user watches a certain television program through the television in the living room at first, and then moves from the living room to the master bedroom, and in the meantime, the user sends a radio broadcast message to all the playing device in the house through the worn smart band. At this moment, the router determines that a playing device corresponding to the strongest received signal strength is the BT speaker in the master bedroom, determines that a duration of the strongest received signal strength exceeds a predefined period of time, and switches an audio of the program played in the television to the BT speaker for playing.

As described above, according to the audio/video playing method provided by the embodiments of the present disclosure, when the first playing device of the at least two playing devices plays the audio/video, the position characteristic of the wearable device is acquired which is the received signal strength, on the playing device side, of the radio broadcast message sent by the wearable device, and the strongest received signal strength of the at least two received signal strengths is determined, whether the duration, for which the strongest received signal strength is kept stronger than the predefined signal strength, reaches the predefined period of time or not is detected, and if the duration, for which the strongest received signal strength is kept stronger than the predefined signal strength, reaches the predefined period of time, the control device determines the playing device corresponding to the strongest received signal strength as the second playing device, and controls the second playing device to play the audio/video. In such way, the problem that the user cannot continue watching the audio/video played by the first playing device after the user moves from a room where the first playing device is located to a new room in the related technology is solved. In addition, the effects that the user wearing the wearable device may continue watching the audio/video through the second playing device in the new room and the user may continue watching the audio/video at different indoor positions are achieved.

Fig. 5 is a block diagram showing an audio/video playing apparatus, according to an exemplary embodiment. The audio/video playing apparatus may be implemented as the control device in the implementation environment shown in Fig. 1 by using a hardware circuit or a combination of software and hardware, and performs all or part of the steps performed by the control device in the embodiment as shown in any one of Figs. 2, 3 and 4A. Referring to Fig. 5, the apparatus may include an acquisition module 501, a determination module 502 and a control module 503.

The acquisition module 501 is configured to, when a first playing device plays an audio/video, acquire a position characteristic of a wearable device.

The determination module 502 is configured to determine a second playing device of at least two playing devices which includes the first playing device and the second playing device, according to the position characteristic acquired by the acquisition module 501.

The control module 503 is configured to control the second playing device determined by the determination module 502 to play the audio/video.

As described above, according to the audio/video playing apparatus provided by the embodiments of the present disclosure, when the first playing device of the at least two playing devices plays the audio/video, the position characteristic of the wearable device is acquired; the second playing device of the at least two playing devices, which includes the first playing device and the second playing device, is determined according to the position characteristic, and the second playing device is controlled to play the audio/video. In such way, the problem that a user cannot continue watching the audio/video played by the first playing device after the user moves from a room where the first playing device is located to a new room in a related technology is solved. In addition, the effects that the user wearing the wearable device may continue watching the audio/video through the second playing device in the new room and the user may continue watching the audio/video at different indoor positions are achieved.

Fig. 6 is a block diagram showing an audio/video playing apparatus according to another exemplary embodiment. The audio/video playing apparatus may be implemented as the control device in the implementation environment as shown in Fig. 1 by using a hardware circuit or a combination of software and hardware, and performs all or part of the steps performed by the control device in the embodiment shown in Fig. 2 or Fig. 3. Referring to Fig. 6, the apparatus may include an acquisition module 601, a determination module 602 and a control module 603.

The acquisition module 601 is configured to, when a first playing device plays an audio/video, acquire a position characteristic of a wearable device which is a geographical position of the wearable device.

The determination module 602 is configured to determine a second playing device of the at least two playing devices, which includes the first playing device and the second playing device, according to the position characteristic acquired by the acquisition module 601.

Optionally, the determination module 602 includes a first determination sub-module 602a.

The first determination sub-module 602a is configured to determine a playing device which is closest to the wearable device as the second playing device according to the geographical position, acquired by the acquisition module 601, of the wearable device and a pre-stored geographical position of each of the playing devices.

The control module 603 is configured to control the second playing device determined by the determination module 602 to play the audio/video.

Optionally, the control module 603 includes an acquisition sub-module 603a and a forwarding sub-module 603b.

The acquisition sub-module 603a is configured to acquire from the first playing device the audio/video including any one of an audio, a video, a video part of the video and an audio part of the video.

The forwarding sub-module 603b is configured to forward the audio/video to the second playing device which is configured to play the audio/video.

As described above, according to the audio/video playing apparatus provided by the embodiments of the present disclosure, when the first playing device of the at least two playing devices plays the audio/video, the position characteristic of the wearable device is acquired, and the position characteristic of the wearable device is the geographical position of the wearable device; the playing device which is closest to the wearable device is determined as the second playing device according to the geographical position of the wearable device and the pre-stored geographical position of each of the playing devices; and the second playing device is controlled to play the audio/video. In such way, the problem that a user cannot continue watching the audio/video played by the first playing device after the user moves from a room where the first playing device is located to a new room in the related technology is solved. In addition, the effects that the user wearing the wearable device may continue watching the audio/video through the second playing device in the new room and the user may continue watching the audio/video at different indoor positions are achieved.

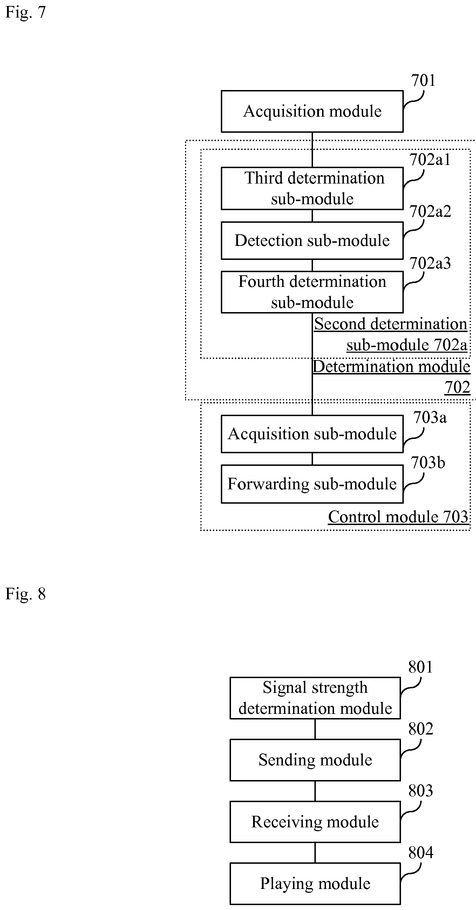

Fig. 7 is a block diagram showing an audio/video playing apparatus according to another exemplary embodiment. The audio/video playing apparatus may be implemented as the control device in the implementation environment as shown in Fig. 1 by using a hardware circuit or a combination of software and hardware, and performs all or part of the steps performed by the control device in the embodiment shown in Fig. 2, 3 or 4A. Referring to Fig. 7, the apparatus may include an acquisition module 701, a determination module 702 and a control module 703.

The acquisition module 701 is configured to, when a first playing device plays an audio/video, acquire a position characteristic of a wearable device which is received signal strength, on the playing device side, of a radio broadcast message sent by the wearable device.

The determination module 702 is configured to determine a second playing device of the at least two playing devices, which includes the first playing device and the second playing device, according to the position characteristic acquired by the acquisition module 701.

Optionally, the determination module 702 further includes a second determination sub-module 702a.

The second determination sub-module 702a is configured to determine the playing device corresponding to the strongest received signal strength as the second playing device.

In another possible implementation, the second determination sub-module 702a includes a third determination sub-module 702a21, a detection sub-module 702a2 and a fourth determination sub-module 702a3.

The third determination sub-module 702a1 is configured to determine the strongest received signal strength of at least two received signal strengths.

The detection sub-module 702a2 is configured to detect whether a duration, for which the strongest received signal strength determined by the third determination sub-module is kept stronger than predefined signal strength, reaches a predefined period of time or not.

The fourth determination sub-module 702a3 is configured to, if the duration, for which the strongest received signal strength is kept stronger than the predefined signal strength, reaches the predefined period of time, determine the playing device corresponding to the strongest received signal strength as the second playing device.

The control module 703 is configured to control the second playing device determined by the determination module 702 to play the audio/video.

Optionally, the control module 703 includes an acquisition sub-module 703a and a forwarding sub-module 703b.

The acquisition sub-module 703a is configured to acquire from the first playing device the audio/video which includes any one of an audio, a video, a video part of the video and an audio part of the video.

The forwarding sub-module 703b is configured to forward the audio/video to the second playing device which is configured to play the audio/video.

As described above, according to the audio/video playing apparatus provided by the embodiments of the present disclosure, when the first playing device of the at least two playing devices plays the audio/video, the position characteristic of the wearable device is acquired, and the position characteristic of the wearable device is the received signal strength, on the playing device side, of the radio broadcast message sent by the wearable device, the strongest received signal strength of the at least two received signal strengths is determined, whether the duration, for which the strongest received signal strength is kept stronger than the predefined signal strength, reaches the predefined period of time or not is detected, and if the duration, for which the strongest received signal strength is kept stronger than the predefined signal strength, reaches the predefined period of time, the control device determines the playing device corresponding to the strongest received signal strength as the second playing device, and controls the second playing device to play the audio/video. In such way, the problem that a user cannot continue watching the audio/video played by the first playing device after the user moves from a room where the first playing device is located to a new room in the related technology is solved. In addition, the effects that the user wearing the wearable device may continue watching the audio/video through the second playing device in the new room and the user may continue watching the audio/video at different indoor positions are achieved.

Fig. 8 is a block diagram showing an audio/video playing apparatus according to another exemplary embodiment. The audio/video playing apparatus may be implemented as the second playing device in the implementation environment as shown in Fig. 1 by using a hardware circuit or a combination of software and hardware, and performs all or part of the steps performed by the second playing device in the embodiment shown in Fig. 4A. Referring to Fig. 8, the apparatus may include a signal strength determination module 801, a sending module 802, a receiving module 803 and a playing module 804.

The signal strength determination module 801 is configured to determine received signal strength of a radio broadcast message sent by a wearable device.

The sending module 802 is configured to send the received signal strength to a control device.

The receiving module 803 is configured to receive an audio/video sent by the control device when the strongest received signal strength is the received signal strength sent by the second playing device after the control device receives the received signal strengths sent by at least two playing devices including a first playing device and the second playing device, wherein the audio/video is an audio/video played by the first playing device.

The playing module 804 is configured to play the audio/video.

As described above, according to the audio/video playing apparatus provided by the embodiments of the present disclosure, the received signal strength of the radio broadcast message sent by the wearable device is determined, the received signal strength is sent to the control device, the audio/video is received from the control device when the strongest received signal strength is the received signal strength sent by the second playing device after the control device receives the received signal strengths sent by the at least two playing devices including the first playing device and the second playing device, wherein the audio/video is the audio/video played by the first playing device, and the audio/video is played. In such way, the problem that a user cannot continue watching the audio/video played by the first playing device after the user moves from a room where the first playing device is located to a new room in the related technology is solved. In addition, the effects that the user wearing the wearable device may continue watching the audio/video through the second playing device in the new room and the user may continue watching the audio/video at different indoor positions are achieved.

It is to be noted that descriptions are made only with division of the respective abovementioned functional modules as an example when the apparatus provided by the embodiment performs an audio/video playing method, and in a practical application, the abovementioned functions may be realized by different functional modules according to a practical requirement, that is, a content structure of the device is divided into different functional modules to realize all or part of the abovementioned functions.

With respect to the devices in the abovementioned embodiments, the manners in which the various modules perform the operations have been described in detail in the embodiments regarding the methods, and will not be elaborated herein.

An exemplary embodiment of the present disclosure further provides an audio/video playing apparatus which may implement an audio/video playing method provided by the embodiments of the present disclosure. The apparatus includes a processor and a memory configured to store instructions executable by the processor.

The processor is configured to:
- when a first playing device plays an audio/video, acquire a position characteristic of a wearable device;
- determine a second playing device of the at least two playing devices which includes the first playing device and the second playing device, according to the position characteristic; and
- control the second playing device to play the audio/video.

Optionally, the position characteristic of the wearable device is a geographical position of the wearable device.

The operation that the second playing device of the at least two playing devices is determined according to the position characteristic includes that the playing device which is closest to the wearable device is determined as the second playing device according to the geographical position of the wearable device and a pre-stored geographical position of each of the playing devices.

Optionally, the position characteristic of the wearable device is the received signal strength, on the playing device side, of a radio broadcast message sent by the wearable device.

The operation that the second playing device of the at least two playing devices is determined according to the position characteristic includes that the playing device corresponding to the strongest received signal strength is determined as the second playing device.

Optionally, the operation that the playing device corresponding to the strongest received signal strength is determined as the second playing device includes that:
- the strongest received signal strength of at least two received signal strengths is determined;
- whether a duration, for which the strongest received signal strength is kept stronger than predefined signal strength, reaches a predefined period of time or not is detected; and
- if the duration, for which the strongest received signal strength is kept stronger than the predefined signal strength, reaches the predefined period of time, the playing device corresponding to the strongest received signal strength is determined as the second playing device.

Optionally, the operation that the second playing device is controlled to play the audio/video includes that:
- the audio/video is acquired from the first playing device, the audio/video including any one of an audio, a video, a video part of the video and an audio part of the video; and
- the audio/video is forwarded to the second playing device which is configured to play the audio/video.

Another exemplary embodiment of the present disclosure further provides an audio/video playing apparatus, which may implement an audio/video playing method provided by the embodiments of the present disclosure. The apparatus includes a processor and a memory configured to store instructions executable by the processor.

The processor is configured to:
- determine received signal strength of a radio broadcast message sent by a wearable device;
- send the received signal strength to a control device;
- receive an audio/video sent by the control device when the strongest received signal strength is the received signal strength sent by the second playing device after the control device receives the received signal strengths sent by at least two playing devices including a first playing device and the second playing device, wherein the audio/video is an audio/video played by the first playing device; and
- play the audio/video.

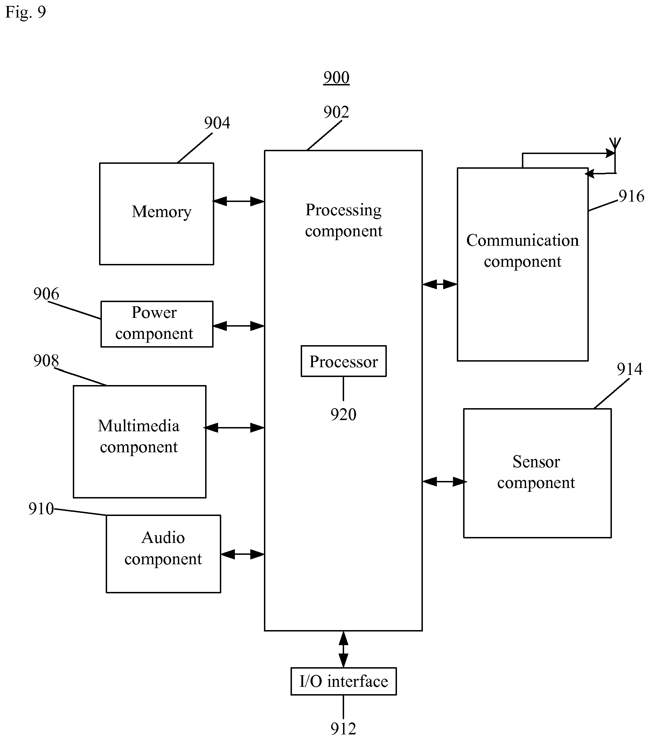

Fig. 9 is a block diagram showing a device 900 according to an exemplary embodiment. For example, the device 900 may be an electronic device such as the first playing euqipment 110, the wearable device 120, the second playing device 130 or other playing device 150.

Referring to Fig. 9, the device 900 may include one or more of a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, data communications, and recording operations. The processing component 902 may include one or more processors 920 to execute instructions for performing all or part of the steps of the abovementioned method. Moreover, the processing component 902 may include one or more modules which facilitate the interaction between the processing component 902 and the other components. For instance, the processing component 902 may include a multimedia module for facilitating the interaction between the multimedia component 908 and the processing component 902.

The memory 904 is configured to store various types of data to support the operation of the device 900. Examples of such data include instructions for any application programs or methods operated on the device 900, position characteristic data, messages, pictures, video, and the like. The memory 904 may be implemented by any type of volatile or non-volatile memory devices such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk, or a combination thereof.

The power component 906 provides power for various components of the device 900. The power component 906 may include a power management system, one or more power supplies, and other components associated with the generation, management and distribution of power for the device 900.

The multimedia component 908 includes a screen providing an output interface between the device 900 and a user. In some embodiments, the screen may include a Liquid Crystal Display (LCD) and a Touch Panel (TP), and may be configured to play a video sent by control device. If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action.

The audio component 910 is configured to output and/or input an audio signal. For example, the audio component 910 includes a Microphone (MIC) which is configured to receive an external audio signal when the device 900 is in the operation mode, such as a call mode, a recording mode and a voice recognition mode. The received audio signal may be further stored in the memory 904 or sent through the communication component 916. In some embodiments, the audio component 910 further includes a speaker configured to output the audio signal.

The I/O interface 912 provides an interface between the processing component 902 and a peripheral interface module which may be a keyboard, a click wheel, a button or the like. The button may include, but not limited to a home button, a volume button, a starting button and a locking button.

The sensor component 914 includes one or more sensors configured to provide status assessment in various aspects for the device 900. For instance, the sensor component 914 may detect a position of the device 900 and relative positioning of components, such as a display and keypad of the device 900, and the sensor component 914 may further detect a change in a position of the device 900 or a component of the device 900, presence or absence of contact between the user and the device 900, orientation or acceleration/deceleration of the device 900 and a change in temperature of the device 900. The sensor component 914 may include a proximity sensor configured to detect presence of an object nearby without any physical contact. The sensor component 914 may also include a light sensor, such as a Complementary Metal Oxide Semiconductor (CMOS) or Charge Coupled Device (CCD) image sensor, which is configured for use in an imaging application. In some embodiments, the sensor component 914 may also include an acceleration sensor, a gyroscope sensor, a magnetic sensor, a pressure sensor or a temperature sensor.

The communication component 916 is configured to facilitate wired or wireless communication between the device 900 and another device. The device 900 may access a communication-standard-based wireless network, such as a Wi-Fi network, a 2^{nd}-Generation (2G) or 3^{rd}-Generation (3G) network or a combination thereof. In an exemplary embodiment, the communication component 916 receives a broadcast signal or broadcast associated information from an external broadcast management system via a broadcast channel. In an exemplary embodiment, the communication component 916 further includes a Near Field Communication (NFC) module to facilitate short-range communication. For example, the NFC module may be implemented on the basis of a Radio Frequency Identification (RFID) technology, an IrDA technology, an Ultra-WideBand (UWB) technology, a BT technology and another technology.

In an exemplary embodiment, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to perform the abovementioned method.

In an exemplary embodiment, there is also provided a non-transitory computer-readable storage medium containing instructions, such as the memory 904 containing instructions and the instructions may be executed by the processor 920 of the device 900 to implement the abovementioned method. For example, the non-transitory computer-readable storage medium may be a ROM, a Compact Disc Read-Only Memory (CD-ROM), a magnetic tape, a floppy disc, an optical data storage device and the like.

According to a non-transitory computer-readable storage medium, when instructions in the storage medium are executed by the processor of the device 900, the device may perform the abovementioned audio/video playing method executed by the first playing device or the second playing device.

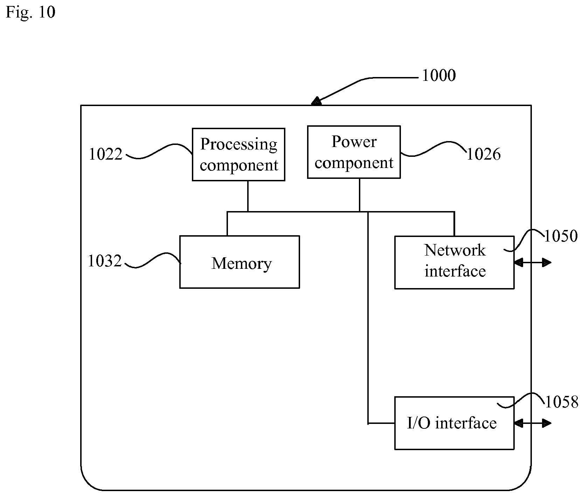

Fig. 10 is a block diagram showing another device 1000 according to an exemplary embodiment. For example, the device 1000 may be provided as a server or a control device 140. Referring to Fig. 10, the device 1000 includes a processing component 1022 which in turn includes one or more processors, and a memory resource represented by a memory 1032 which is configured to store instructions executable by the processing component 1022, such as application programs. The application programs stored in the memory 1032 may include one or more modules, each of which corresponds to a set of instructions. In addition, the processing component 1022 is configured to execute the instructions, so as to perform the abovementioned audio/video playing method performed by the control device.

The device 1000 may further include a power component 1026 configured to perform mangement on the power of the device 1000, a wired or wireless network interface 1050 configured to connect the device 1000 to a network, and an I/O interface 1058. The device 1000 may be operated on the basis of an operating system stored in the memory 1032, such as Windows Server™, Mac OS X™, Unix™, Linux™ or FreeBSD™.

Other implementations of the embodiments of the present disclosure will be easily conceived by those skilled in the art from consideration of the specification and practice of the present disclosure. This application is intended to cover any variations, uses, or adaptations of the embodiments of the present disclosure following the general principles of the embodiments of the present disclosure and including common knowledge or conventional technical means in the relevant art which is not disclosed by the embodiments of the present disclosure. It is intended that the specification and embodiments are considered as exemplary only, and a true scope and spirit of the embodiments of the present disclosure are indicated by the following claims.

It will be appreciated that the embodiments of the present disclosure are not limited to the exact construction that has been described above and illustrated in the accompanying drawings, and that various modifications and changes may be made without departing from the scope thereof. It is intended that the scope of the embodiments of the present disclosure is only limited by the appended claims.

### INDUSTRIAL APPLICABILITY

According to the technical solution provided by the embodiments of the present disclosure, when the first playing device of the at least two playing devices plays the audio/video, the position characteristic of the wearable device is acquired; the second playing device of the at least two playing devices is determined according to the position characteristic; and the second playing device is controlled to play the audio/video, so that the problem that a user cannot continue watching the audio/video played by the first playing device after the user moves from a room where the first playing device is located to a new room in a related technology is solved, and the effects that the user wearing the wearable device may continue watching the audio/video through the second playing device in the new room and the user may continue watching the audio/video at different indoor positions are achieved.

## Claims

1. An audio/video playing method applied to a control device connected with at least two playing devices, **characterized by** comprising:
when a first playing device of the at least two playing devices plays an audio/video,
acquiring a position characteristic of a wearable device (201);
determining a second playing device of the at least two playing devices according to the position characteristic (202); and
controlling the second playing device to play the audio/video (203).

2. The method according to claim 1, wherein the position characteristic of the wearable device is a geographical position of the wearable device; and
determining the second playing device of the at least two playing devices according to the position characteristic (202) comprises:
determining a playing device, which is closest to the wearable device, as the second playing device according to the geographical position of the wearable device and a pre-stored geographical position of each of the playing devices (302).

3. The method according to claim 1, wherein the position characteristic of the wearable device is received signal strength, on the playing device side, of a radio broadcast message sent by the wearable device; and
determining the second playing device of the at least two playing devices according to the position characteristic (202) comprises:
determining a playing device corresponding to the strongest received signal strength as the second playing device (404).

4. The method according to claim 3, wherein determining the playing device corresponding to the strongest received signal strength as the second playing device (404) comprises:
determining the strongest received signal strength of at least two received signal strengths (404a);
detecting whether a duration, for which the strongest received signal strength is kept stronger than predefined signal strength, reaches a predefined period of time or not (404b); and
if the duration, for which the strongest received signal strength is kept stronger than the predefined signal strength, reaches the predefined period of time, determining the playing device corresponding to the strongest received signal strength as the second playing device (404c).

5. The method according to any one of claims 1 to 4, wherein controlling the second playing device to play the audio/video comprises:
acquiring from the first playing device the audio/video comprising any one of an audio, a video, a video part of the video and an audio part of the video; and
forwarding the audio/video to the second playing device which is configured to play the audio/video.

6. An audio/video playing method applied to a second playing device, **characterized by** comprising:
determining received signal strength of a radio broadcast message sent by a wearable device (401);
sending the received signal strength to a control device (402);
receiving an audio/video sent by the control device when the strongest received signal strength is the received signal strength sent by the second playing device after the control device receives the received signal strengths sent by at least two playing devices comprising a first playing device and the second playing device, the audio/video being an audio/video played by the first playing device; and
playing the audio/video (406).

7. An audio/video playing apparatus applied to a control device which is connected with at least two playing devices, **characterized by** comprising:
an acquisition module (501) configured to, when a first playing device of the at least two playing devices plays an audio/video, acquire a position characteristic of a wearable device;
a determination module (502) configured to determine a second playing device of the at least two playing devices according to the position characteristic acquired by the acquisition module (501); and
a control module (503) configured to control the second playing device determined by the determination module (502) to play the audio/video.

8. The apparatus according to claim 7, wherein the position characteristic, acquired by the acquisition module (501, 601), of the wearable device is a geographical position of the wearable device; and
the determination module (502, 602) comprises:
a first determination sub-module (602a) configured to determine a playing device,
which is closest to the wearable device, as the second playing device according to the geographical position of the wearable device and a pre-stored geographical position of each of the playing devices.

9. The apparatus according to claim 7, wherein the position characteristic, acquired by the acquisition module (501, 701), of the wearable device is received signal strength, on the playing device side, of a radio broadcast message sent by the wearable device; and
the determination module (502, 702) further comprises:
a second determination sub-module (702a) configured to determine a playing device corresponding to the strongest received signal strength as the second playing device.

10. The apparatus according to claim 9, wherein the second determination sub-module (702a) comprises:
a third determination sub-module (702a1) configured to determine the strongest received signal strength of at least two received signal strengths;
a detection sub-module (702a2) configured to detect whether a duration, for which the strongest received signal strength determined by the third determination sub-module is kept stronger than predefined signal strength, reaches a predefined period of time or not; and
a fourth determination sub-module (702a3) configured to, if the duration, for which the strongest received signal strength is kept stronger than the predefined signal strength, reaches the predefined period of time, determine the playing device corresponding to the strongest received signal strength as the second playing device.

11. The apparatus according to any one of claims 7 to 10, wherein the control module (503, 603) comprises:
an acquisition sub-module (603a) configured to acquire from the first playing device the audio/video comprising any one of an audio, a video, a video part of the video and an audio part of the video; and
a forwarding sub-module (603b) configured to forward the audio/video to the second playing device which is configured to play the audio/video.

12. An audio/video playing apparatus applied to a second playing device, **characterized by** comprising:
a signal strength determination module (801) configured to determine received signal strength of a radio broadcast message sent by a wearable device;
a sending module (802) configured to send the received signal strength to a control device;
a receiving module (803) configured to receive an audio/video sent by the control device when the strongest received signal strength is the received signal strength sent by the second playing device after the control device receives the received signal strengths sent by at least two playing devices comprising a first playing device and
the second playing device, the audio/video being an audio/video played by the first playing device; and
a playing module (804) configured to play the audio/video.

13. An audio/video playing apparatus applied to a control device which is connected with at least two playing devices, **characterized by** comprising:
a processor; and
a memory configured to store instructions executable by the processor,
wherein the processor is configured to:
when a first playing device of the at least two playing devices plays an audio/video, acquire a position characteristic of a wearable device;
determine a second playing device of the at least two playing devices according to the position characteristic; and
control the second playing device to play the audio/video.

14. An audio/video playing apparatus applied to a second playing device, **characterized by** comprising:
a processor; and
a memory configured to store instructions executable by the processor,
wherein the processor is configured to:
determine received signal strength of a radio broadcast message sent by a wearable device;
send the received signal strength to a control device;
receive an audio/video sent by the control device when the strongest received signal strength is the received signal strength sent by the second playing device after the control device receives the received signal strengths sent by at least two playing devices comprising first playing device and the second playing device, the audio/video being an audio/video played by the first playing device; and
play the audio/video.

15. A computer program including instructions for executing the steps of an audio/video playing method according to any one of claims 1 to 5 when said program is executed by a computer.

16. A recording medium readable by a computer and having recorded thereon a computer program including instructions for executing the steps of an audio/video playing method according to any one of claims 1 to 5.

17. A computer program including instructions for executing the steps of an audio/video playing method according to claim 6 when said program is executed by a computer.

18. A recording medium readable by a computer and having recorded thereon a computer program including instructions for executing the steps of an audio/video playing method according to claim 6.
